Europäisches Patentamt

European Patent Office

Office européen des brevets

(19)

(11) Veröffentlichungsnummer: **0 262 477**
**A2**

(12) **EUROPÄISCHE PATENTANMELDUNG**

(21) Anmeldenummer: 87113200.7

(51) Int. Cl.⁴: **G06F 12/06**

(22) Anmeldetag: 09.09.87

(30) Priorität: 29.09.86 DE 3633026

(43) Veröffentlichungstag der Anmeldung:
06.04.88 Patentblatt 88/14

(84) Benannte Vertragsstaaten:
AT DE IT

(71) Anmelder: **Siemens Aktiengesellschaft Berlin und München**
**Wittelsbacherplatz 2**
**D-8000 München 2(DE)**

(72) Erfinder: **Franz, Dietmar, Dipl.-Ing. (FH)**
**Edelweissstrasse 66**
**D-8039 Puchheim(DE)**

(54) Schaltungsanordnung zum Übertragen von Datensignalen.

(57) Die Übertragung von Datensignalen erfolgt im Zuge von gesonderten Verbindungen zwischen einer zentralen Steuereinrichtung (ZST) und einer Vielzahl von mit dieser über eine gemeinsam genutzte Leitungsanordnung (Ltg) verbundenen peripheren Einrichtungen (PE). Diesen peripheren Einrichtungen ist jeweils eine Einrichtungsadresse fest zugeordnet, welche der jeweiligen peripheren Einrichtung für im Zuge eines Verbindungsaufbaues und/oder einer bestehenden Verbindung und/oder eines Verbindungsabbaus zwischen ihr und der zentralen Steuereinrichtung abzuwickelnde Steuerungsvorgänge zur Verfügung steht. Dabei ist vorgesehen, daß die peripheren Einrichtungen (PE) jeweils von einer von in einer Vielzahl vorgesehenen, mit der genannten Leitungsanordnung (Ltg) verbundenen Aufnahmevorrichtungen (AV1, ..., AVn) aufgenommen sind, deren jeder eine Adresse fest zugeordnet ist, welche der jeweiligen von ihr aufgenommenen peripheren Einrichtung als deren Einrichtungsadresse bereitsteht.

EP 0 262 477 A2

## Schaltungsanordnung zum Übertragen von Datensignalen

Die Erfindung betrifft eine Schaltungsanordnung zum Übertragen von Datensignalen im Zuge von gesonderten Verbindungen zwischen einer zentralen Steuereinrichtung und einer Vielzahl von mit dieser über eine gemeinsam genutzte Schaltungsanordnung verbundenen peripheren Einrichtungen, denen jeweils eine Einrichtungsadresse fest zugeordnet ist, welche der jeweiligen peripheren Einrichtung für im Zuge eines Verbindungsaufbaues und/oder einer bestehenden Verbindung und/oder eines Verbindungsabbaues zwischen ihr und der zentralen Steuereinrichtung abzuwickelnde Steuerungsvorgänge zur Verfügung steht.

Die zu einer derartigen Schaltungsanordnung gehörenden peripheren Einrichtungen weisen im allgemeinen Speichereinrichtungen auf, in denen die für die jeweilige periphere Einrichtung zugeordnete Einrichtungsadresse gespeichert ist. Als Speichereinrichtungen kommen hier beispielsweise als Adressengeber verwendete manuell einstellbare Schalter, Festwertspeicher oder ladbare Adressenregister in Frage. In keinem der Fälle ist es dabei zweckmäßig, bereits im Zuge der Fertigung von peripheren Einrichtungen für deren Betrieb erforderliche Einrichtungsadressen festzulegen und auf den jeweiligen peripheren Einrichtungen zu speichern. Denn Einrichtungsadressen für periphere Einrichtungen werden erst durch die Zuordnung von Einrichtungsplätzen innerhalb der betreffenden Schaltungsanordnung bestimmt. Damit ist insbesondere bei über eine Vielzahl von peripheren Einrichtungen verfügenden Schaltungsanordnungen vor deren Inbetriebnahme seitens des Wartungspersonals ein erheblicher zeitlicher Aufwand erforderlich, um die den einzelnen peripheren Einrichtungen zuzuord nenden Einrichtungsadressen auf diesen zu speichern. Ein solches gesondertes Speichern von Einrichtungsadressen muß im übrigen auch immer dann erfolgen, wenn periphere Einrichtungen auszutauschen sind.

Es ist nun Aufgabe der vorliegenden Erfindung, einen Weg zu zeigen, wie bei einer Schaltungsanordnung der eingangs genannten Art ein Speichern von Einrichtungsadressen auf den zu der betreffenden Schaltungsanordnung gehörenden peripheren Einrichtungen vermieden werden kann.

Gelöst wird die vorstehende aufgezeigte Aufgabe bei einer Schaltungsanordnung der eingangs genannten Art gemäß der vorliegenden Erfindung dadurch, daß die peripheren Einrichtungen jeweils von einer von in einer Vielzahl vorgesehenen, mit der genannten Leitungsanordnung verbundenen Aufnahmevorrichtungen aufgenommen sind, deren jeder eine Adresse fest zugeordnet ist, welche der jeweiligen von ihr aufgenommenen peripheren Einrichtung als deren Einrichtungsadresse bereitsteht.

Die Erfindung bringt den Vorteil mit sich, daß innerhalb einer Schaltungsanordnung lediglich den in dieser vorhandenen Aufnahmevorrichtungen jeweils eine Adresse fest zugeordnet ist, welche der jeweils aufgenommenen peripheren Einrichtung als Einrichtungsadresse bereitsteht. Bei den den Aufnahmevorrichtungen zugeordneten Adressen handelt es sich um schaltungsanordnungsspezifische Adressen, die bereits bei der Fertigung der Schaltungsanordnung festlegbar sind. Da die peripheren Einrichtungen Einrichtungsadressen von den Aufnahmevorrichtungen her zugeführt erhalten, sind auf den peripheren Einrichtungen keine gesonderten Einrichtungen zur Speicherung von Einrichtungsadressen erforderlich. Damit entfallen dann auch die zuvor erwähnten Einstellvorgänge bzw. Einrichtvorgänge auf den peripheren Einrichtungen bei deren Aufnahme in eine spezielle Schaltungsanordnung.

Zweckmäßiger Weise bestehen die Aufnahmevorrichtungen jeweils aus einer Steckverbinderanordnung, über welche die jeweilige periphere Einrichtung über eine vorgegebene Anzahl von in einem gesonderten Bereich der jeweiligen Steckverbinderanordnung angeordneten Steckkontakten eine fest verdrahtete Adresse als Einrichtungsadresse zugeführt erhält. Dies bringt den Vorteil mit sich, daß den Steckverbinderanordnungen beispielsweise innerhalb eines für die Aufnahme von peripheren Einrichtungen vorgesehenen Baugruppenträgers jeweils eine ortsabhängige Adresse zuordenbar ist, welche der jeweiligen Steckverbinderanordnung über einen in den Baugruppenträger vorgesehenen Verdrahtungsrahmen zugeführt ist.

Um dabei an den einzelnen Steckverbinderanordnungen möglichst wenige Steckkontakte für die Bereitstellung einer fest verdrahteten Adresse zu belegen, ist es zweckmäßig, daß die fest verdrahteten Adressen in codierter Form an den gesonderten Steckkontakten der Steckverbinderanordnungen anliegen.

Im folgenden wird die Erfindung anhand einer Zeichnung beispielsweise näher beschrieben.

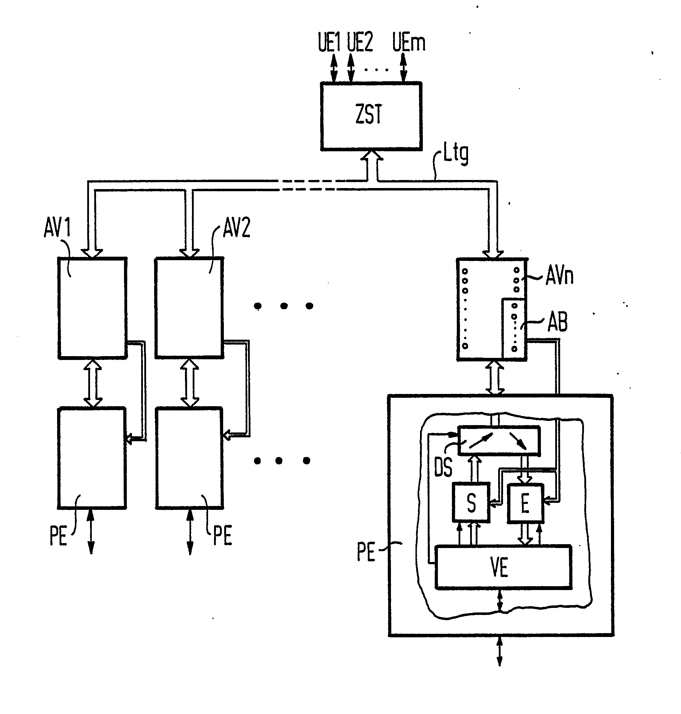

In der Zeichnung ist eine Datensignal-Übertragungsanlage dargestellt. Bei dieser möge es sich beispielsweise um eine Datenvermittlungsanlage handeln. Diese Datenvermittlungsanlage weist eine zentrale Steuereinrichtung ZST mit einer Vielzahl von Übertragungsleitungen UE1 - UEm auf, welche wahlweise als Teilnehmerleitungen für den Anschluß von Datenendgeräten oder als Amtsverbindungsleitungen für den Anschluß weiterer Datenvermittlungsanlagen benutzbar sind.

Die zentrale Steuereinrichtung ZST steht darüber hinaus über eine beispielsweise aus einer Mehrzahl von Einzelleitungen bestehenden Leitungsanordnung Ltg mit einer Vielzahl von peripheren Einrichtungen PE in Verbindung. Diese peripheren Einrichtungen sind dabei jeweils über eine Aufnahmevorrichtung an die Leitungsanordnung angeschlossen. Die Aufnahmevorrichtungen sind in der Zeichnung mit AV1 - AVn bezeichnet. Bei diesen Aufnahmevorrichtungen handelt es sich um in einem Baugruppenträger angeordnete Steckverbinderanordnungen. Diesen Steckverbinderanordnungen ist jeweils eine beispielsweise von ihren Einbauorten innerhalb des Baugruppenträgers abhängige Adresse fest zugeordnet. Diese Adresse liegt in codierter Form an gesonderten Steckkontakten der jeweiligen Steckverbinderanordnung an, indem beispielsweise diesen gesonderten Steckkontakten entsprechend der gewählten Codierung logische Potentiale festverdrahtet zugeführt werden. Die gesonderten Kontakte sind im übrigen in einem in der Zeichnung mit AB bezeichneten Bereich der jeweiligen Steckverbinderanordnung angeordnet. Die an diesen gesonderten Steckkontakten anliegende Adresse wird, wie im folgenden noch erläutert werden wird, der mit der jeweiligen Aufnahmevorrichtung verbundenen peripheren Einrichtung PE als deren Einrichtungsadresse zugeführt.

Bei den peripheren Einrichtungen PE handelt es sich um Umsetzeinrichtungen, über die die zentrale Steuereinrichtung ZST mit weiteren Übertragungsleitungen für die Aufnahme bzw. Abgabe von Datensignalen verbunden ist. Beispiele für derartige Umsetzeinrichtungen sind Einrichtungen zur Umsetzung des Datensignalformates, Einrichtungen zur Umsetzung der Übertragungsgeschwindigkeit sowie Einrichtungen zur Prozedurumsetzung. Derartige Prozedurumsetzungen sind beispielsweise bei einem Übergang zwischen Vermittlungsanlagen von mit unterschiedlichen Übertragungsprozeduren arbeitenden Vermittlungsnetzen, wie z.B. Telex-und Teletexnetzen, erforderlich. Die genannten peripheren Einrichtungen PE sind hinsichtlich ihres schaltungstechnischen Aufbaues identisch. Aus diesem Grunde ist in der Zeichnung dieser Aufbau lediglich für die mit der Aufnahmevorrichtung AVn verbundene periphere Einrich tung ausschnittweise dargestellt. Diese periphere Einrichtung verfügt über eine mit VE bezeichnete Verarbeitungseinheit, welche die Umsetzung und Weiterleitung von ihr über die Leitungsanordnung Ltg bzw. über die mit ihr verbundene Übertragungsleitung zugeführten Datensignale steuert. Mit dieser Verarbeitungseinheit sind zu der jeweiligen Aufnahmevorrichtung hin, hier zu der Aufnahmevorrichtung AVn hin; eine für die Aufnahme von Datensignalen dienende Empfangseinrichtung E und eine für die Abgabe von Datensignalen dienende Sendeeinrichtung S verbunden. Diese beiden Einrichtungen sind dabei von der Verarbeitungseinheit VE her über jeweils eine Steuerleitung steuerbar. Jede dieser Einrichtungen erhält außerdem über die zuvor genannten gesonderten Steckkontakte die der jeweiligen Aufnahmevorrichtung zugeordnete Adresse zugeführt.

Mit der Empfangseinrichtung E und der Sendeeinrichtung S ist schließlich noch ein von der Verarbeitungseinheit VE her steuerbarer Datenselektor DS verbunden. Dieser Datenselektor verbindet, gesteuert durch die Verarbeitungseinheit, für die Aufnahme bzw. Abgabe von Datensignalen wahlweise die Empfangseinrichtung E bzw. die Sendeeinrichtung S mit der Leitungsanordnung Ltg.

Der Austausch von Datensignalen zwischen der zentralen Steuereinrichtung ZST und den peripheren Einrichtungen PE erfolgt im Zuge von gesonderten Verbindungen, welche hinsichtlich ihres Aufbaues bzw. Abbaues sowohl von der zentralen Steuereinrichtung als auch von den peripheren Einrichtungen her steuerbar sind. Für im Zuge des Aufbaues bzw. Abbaues derartiger Verbindungen und ggf. für bei bestehenden Verbindungen zwischen der zentralen Steuereinrichtung und den peripheren Einrichtungen abzuwickelnde Steuerungsvorgänge ist den einzelnen peripheren Einrichtungen jeweils eine Einrichtungsadresse in Form der von der zugehörigen Aufnahmevorrichtung bereitgestellten Adresse zugeordnet. Bei einem Verbindungs wunsch von der zentralen Steuereinrichtung ZST her wird z.B. in der den einzelnen peripheren Einrichtungen jeweils zugehörigen Empfangseinrichtung E anhand der der jeweiligen peripheren Einrichtung zugeordneten Einrichtungsadresse und einer von der zentralen Steuereinrichtung abgegebenen Adresse durch einen Adressenvergleich die für die betreffende Verbindung ausgewählte periphere Einrichtung ermittelt. Dabei wird lediglich die der ausgewählten peripheren Einrichtung zugehörige Empfangseinrichtung für die Aufnahme von Datensignalen wirksam gesteuert.

Bei einem Verbindungswunsch von einer der peripheren Einrichtungen her gibt dagegen die dieser peripheren Einrichtung zugehörige Sendeeinrichtung S die von der zugehörigen Aufnahmevorrichtung bereitgestellte Einrichtungsadresse an die zentrale Steuereinrichtung ZST ab, um dieser den Verbindungswunsch anzuzeigen.

Darüber hinaus können die von den Aufnahmevorrichtungen bereitgestellten Einrichtungsadressen auch im Zuge von bestehenden Verbindungen bzw. des Abbaus von Verbindungen von den peripheren Einrichtungen her zu der zentralen Steuereinrichtung ZST übertragen werden, um beispielsweise mit diesen Einrichtungsadressen den peripheren Einrichtungen individuell zugeordnete Speicheranordnungen anzusteuern. Bei einer derartigen Ansteuerung können beispielsweise in die durch die übertragene Einrichtungsadresse bezeichnete Speicheranordnung Angaben bezüglich der gerade bestehenden bzw. abzubauenden Verbindung eingetragen werden. Beispiele für solche Angaben sind Angaben bezüglich der Dauer des Bestehens der betreffenden Verbindung, falls die Dauer der Verbindungen in den peripheren Einrichtungen erfaßt wird, sowie Angaben bezüglich des Verbindungsweges, die der jeweiligen peripheren Einrichtung über die mit ihr verbundene Übertragungsleitung zugeführt werden.

Vorstehend wurde die vorliegende Erfindung am Beispiel einer Vermittlungsanlage erläutert, bei welcher Datensignale zwischen einer zentralen Steuereinrichtung und einer Vielzahl von mit dieser verbundenen Umsetzeinrichtungen übertragbar sind. Die Anwendung der vorliegenden Erfindung ist jedoch nicht auf derartige Vermittlungsanlagen beschränkt. Vielmehr kann sie überall dort Anwendung finden, wo zwischen einer zentralen Steuereinrichtung und von dieser her adressierbaren peripheren Einrichtungen Datensignale auszutauschen sind bzw. über diese peripheren Einrichtungen Datensignale von der betreffenden zentralen Steuereinrichtung aufzunehmen bzw. abzugeben sind.

## Ansprüche

1. Schaltungsanordnung zum Übertragen von Datensignalen im Zuge von gesonderten Verbindungen zwischen einer zentralen Steuereinrichtung (ZST) und einer Vielzahl von mit dieser über eine gemeinsam genutzte Leitungsanordnung (Ltg) verbundenen peripheren Einrichtungen (PE), denen jeweils eine Einrichtungsadresse fest zugeorndet ist, welche der jeweiligen peripheren Einrichtung für im Zuge eines Verbindungsaufbaues und/oder einer bestehenden Verbindung und/oder eines Verbinungsabbaues zwischen ihr und der zentralen Steuereinrichtung abzuwickelnde Steuerungsvorgänge zur Verfügung steht, **dadurch gekennzeichnet,** daß die peripheren Einrichtungen (PE) jeweils von einer von in einer Vielzahl vorgesehenen, mit der genannten Leitungsanordnung (Ltg) verbundenen Aufnahmevorrichtungen (AV1, ..., AVn) aufgenommen sind, deren jeder eine Adresse fest zugeordnet ist, welche der jeweiligen von ihr aufgenommenen peripheren Einrichtung als deren Einrichtungsadresse bereitsteht.

2. Schaltungsanordnung nach Anspruch 1, **dadurch gekennzeichnet,** daß die Aufnahmevorrichtungen (AV1 - AVn) jeweils aus einer Steckverbinderanordnung bestehen, über welche die jeweilige periphere Einrichtung (PE) eine fest verdrahtete Adresse als Einrichtungsadresse über eine vorgegebene Anzahl von in einem gesonderten Bereich der jeweiligen Steckverbinderanordnung angeordneten Steckkontakten zugeführt erhält.

3. Schaltungsanordnung nach Anspruch 2, **dadurch gekennzeichnet,** daß die fest verdrahteten Adressen in codierter Form an den gesonderten Steckkontakten der Steckverbinderanordnungen anliegen.